# EUROPÄISCHE PATENTSCHRIFT

(11) **EP 1 642 662 B1**
(45) Veröffentlichungstag und Bekanntmachung des Hinweises auf die Patenterteilung: **30.01.2008**
(21) Anmeldenummer: 05020969.1
(22) Anmeldetag: 27.09.2005
(51) Int. Cl.: B23B 31/12

(54) **Spanneinrichtung für Werkstücke**
Clamping device for workpieces
Dispositif de serrage pour pièces à usiner

(30) Priorität: 29.09.2004 DE 102004048040
(43) Veröffentlichungstag der Anmeldung: 05.04.2006
(73) Patentinhaber: Index-Werke GmbH & Co. KG Hahn & Tessky, 73730 Esslingen (DE)
(72) Erfinder: Grossmann, Walter, 73666 Baltmannsweiler (DE)
(74) Vertreter: Hoeger, Stellrecht & Partner Patentanwälte

(56) Entgegenhaltungen:
- EP-A- 0 626 225
- EP-A- 0 668 118
- DE-A1- 4 133 537
- DE-A1- 10 025 467
- US-A- 4 448 406
- PATENT ABSTRACTS OF JAPAN Bd. 012, Nr. 010 (M-658), 13. Januar 1988 (1988-01-13) -& JP 62 173107 A (MITSUBISHI METAL CORP), 30. Juli 1987 (1987-07-30)

## Beschreibung

Die Erfindung betrifft eine Spanneinrichtung für eine um eine Spindelachse rotierend antreibbare Spindel zum Spannen von Werkstücken, umfassend ein um die Spindelachse rotierend bewegbares Gehäuse und in dem Gehäuse in Führungen in einer Führungsrichtung bewegbar geführte Spannbacken.

Derartige Spanneinrichtungen sind aus dem Stand der Technik bekannt (siehe z.B. JP-A-62 173 107).

Bei diesen sind die Führungen als Gleitführungen ausgebildet, die bei einer variablen Einstellung einer Spannkraft - insbesondere beim Reduzieren derselben - eine größere Hysterese hinsichtlich der Einstellbarkeit der Spannkraft zeigen, da die Gleitführungen insbesondere bei wirksamer Spannkraft der Spannbacken schwergängig sind.

Der Erfindung liegt die Aufgabe zugrunde, eine Spanneinrichtung zu schaffen, bei welcher die Spannkraft der Spannbacken variabel und mit möglichst geringer Hysterese einstellbar ist.

Diese Aufgabe wird bei einer Spanneinrichtung der eingangs beschriebenen Art erfindungsgemäß dadurch gelöst, daß die Führungen als Wälzführungen ausgebildet sind und daß jede Führung einen Führungsabschnitt des jeweiligen Spannbackens zwischen mindestens zwei Wälzführungen führt, die sich parallel zu der Führungsrichtung erstrecken.

Der Vorteil der erfindungsgemäßen Lösung ist darin zu sehen, daß durch den zwischen den mindestens zwei Wälzführungen geführten Führungsabschnitt die Möglichkeit besteht, den Führungsabschnitt leichtgängig zu führen und dadurch die Möglichkeit zu schaffen, variabel die Spannkraft zu vergrößern und danach wieder reduzieren zu können, ohne daß, insbesondere beim Reduzieren der Spannkraft, eine nennenswerte Hysterese auftritt.

Dabei ist es besonders günstig, wenn die Wälzführungen den Führungsabschnitt gegen eine Bewegung in Richtung quer zur Führungsrichtung und parallel zu einer Kraftwirkungsebene abgestützt führen.

Eine derartige Führung des Führungsabschnitts hat den großen Vorteil, daß damit die Möglichkeit besteht, die durch die Betätigungskraft und die Spannkraft entstehenden quer zur Führungsebene und parallel zur Kraftwirkungsebene verlaufenden Kräfte in die Wälzführungen einzuleiten, die trotz dieser Kräfte eine leichte Bewegbarkeit des Führungsabschnitts der Spannbacken gewährleisten.

Die Kraftwirkungsebene ist dabei diejenige Ebene, die durch die jeweilige Spannkraft die auf den jeweiligen Spannbacken wirkt, und die Führungsrichtung aufgespannt wird.

Aus diesem Grund sind vorteilhafterweise auch die Wälzführungen so ausgebildet und angeordnet, daß sie die auf den Führungsabschnitt quer zur Führungsrichtung und parallel zu einer Kraftwirkungsebene verlaufenden Querkräfte aufnehmen.

Insbesondere sind die Wälzführungen dabei so ausgebildet, daß sie auf den Führungsabschnitt durch die Spannkraft wirkende Kippmomente aufnehmen.

Eine besonders vorteilhafte und gute Führung durch die Wälzführungen wird dann gewährleistet, wenn die Wälzführungen in entgegengesetzten Richtungen quer zur Führungsrichtung und parallel zur Kraftwirkungsebene wirkende Kräfte aufnehmend ausgebildet sind, so daß damit die Möglichkeit besteht, mit den Spannbacken in entgegengesetzten Richtungen, das heißt insbesondere in Richtung einer Mittelachse der Spanneinrichtung oder von einer Mittelachse weg gerichtete Spannkräfte zu erzeugen.

Insbesondere dienen dabei die Wälzführungen dazu, die in der Kraftwirkungsebene und senkrecht zur Führungsrichtung wirkenden Komponenten der jeweiligen Spannkraft sowie der jeweiligen Betätigungskraft aufzunehmen.

Eine besonders vorteilhafte Abstützung des Führungsabschnitts durch die Wälzführungen erfolgt dann, wenn die mindestens zwei Wälzführungen den Führungsabschnitt zur Kraftwirkungsebene symmetrisch abstützen und somit auf den Führungsabschnitt wirkende Kippkräfte weitgehend vermeiden, aufgrund welcher eine Kippbewegung des Führungsabschnitts um zur Führungsrichtung parallele Achsen auftreten könnte.

Eine besonders stabile Führung der Führungsabschnitte in der Spanneinrichtung ist dann gegeben, wenn die Wälzführungen die Führungsabschnitte in einer durch die Führungsrichtung hindurch und quer zur Kraftwirkungsebene verlaufenden Führungsebene ausgerichtet führen, das heißt, daß die Wälzführungen gleichzeitig die Ausrichtung des Führungsabschnitts parallel zur Führungsebene stabilisieren.

Hinsichtlich der Ausrichtung der Kraftwirkungsebene selbst wurden bislang keine näheren Angaben gemacht. Vorzugsweise ist die Kraftwirkungsebene so ausgerichtet, daß sie parallel zu einer Mittelachse der Spanneinrichtung verläuft.

Noch vorteilhafter ist es, wenn die Kraftwirkungsebene durch die Mittelachse der Spanneinrichtung hindurch verläuft und somit die Spannkräfte in radialer Richtung zur Mittelachse wirksam sind.

Hinsichtlich der Führung des Führungsabschnitts mittels der mindestens zwei Wälzführungen wurden bislang keine näheren Angaben gemacht. So sieht eine vorteilhafte Lösung vor, daß der Führungsabschnitt auf einer ersten Seite mit einer ersten Wälzführung geführt ist.

Ferner ist vorzugsweise vorgesehen, daß der Führungsabschnitt auf einer zweiten der ersten Seite gegenüberliegenden Seite durch mindestens eine zweite Wälzführung geführt ist.

Vorteilhafterweise ist der Führungsabschnitt auf der zweiten Seite durch zwei im Abstand voneinander angeordnete zweite Wälzführungen geführt.

Besonders günstig ist es dabei, wenn die zweiten Wälzführungen symmetrisch zur Kraftwirkungsebene angeordnet sind.

Ferner ist es ebenfalls günstig, wenn die erste Wälzführung symmetrisch zur Kraftwirkungsebene angeordnet ist.

Im Rahmen der erfindungsgemäßen Lösung könnten die Wälzführungen separate selbstständige Einheiten sein, die zwischen dem Führungsabschnitt und dem Gehäuse wirksam sind.

Eine hinsichtlich der Ausführung besonders vorteilhafte Lösung sieht vor, daß der Führungsabschnitt auf der ersten Seite eine erste Abwälzfläche für Wälzkörper der ersten Wälzführung trägt, so daß der Führungsabschnitt selbst die Abwälzfläche für die Wälzkörper der ersten Wälzführung bildet und somit Teil derselben ist.

Darüber hinaus ist vorteilhafterweise vorgesehen, daß der Führungsabschnitt auf der zweiten Seite mindestens eine zweite Abwälzfläche für Wälzkörper der mindestens einen zweiten Wälzführung bildet, so daß auch hierbei der Führungsabschnitt selbst Teil der zweiten Wälzführung ist.

Besonders zweckmäßig ist es, wenn der Führungsabschnitt auf der zweiten Seite zwei zweite Abwälzflächen für Wälzkörper der zweiten Wälzführungen bildet.

Hinsichtlich der Ausbildung des Gehäuses zur Aufnahme der Wälzführungen wurden im Zusammenhang mit den bisherigen Ausführungsbeispielen ebenfalls keine näheren Angaben gemacht. So sieht eine vorteilhafte Ausführungsform vor, daß das Gehäuse eine Aufnahme für jeden Führungsabschnitt eines jeden Spannbacken aufweist.

Zweckmäßigerweise ist auch in diesem Fall vorgesehen, daß die Aufnahme eine gehäuseseitige erste Abwälzfläche für die Wälzkörper der ersten Wälzführung bildet.

Ferner ist vorzugsweise vorgesehen, daß die Aufnahme mindestens eine gehäuseseitige zweite Abwälzfläche für die Wälzkörper der mindestens einen zweiten Wälzführung bildet.

Noch vorteilhafter ist es, wenn die Aufnahme zwei gehäuseseitige zweite Abwälzflächen für die zweiten Wälzführungen bildet.

Hinsichtlich der Ausrichtung der Führungsrichtungen relativ zu einer Mittelachse des Gehäuses wurden bislang keine näheren Angaben gemacht. So können theoretisch die Führungsrichtungen senkrecht zur Mittelachse verlaufen.

Besonders günstig ist es jedoch, wenn die Führungsrichtungen der Spannbacken in einem spitzen Winkel zu einer Mittelachse des Gehäuses verlaufen, das heißt in einem Winkel von kleiner 90°.

Um eine einfache Möglichkeit zur Einwirkung mit der Betätigungskraft auf die Spannbacken zu erhalten, ist es günstig, wenn die Führungsrichtungen der Spannbacken in einem Winkel von maximal ungefähr 60° relativ zur Mittelachse verlaufen.

Noch vorteilhafter ist es, wenn die Führungsrichtungen in einem Winkel von maximal ungefähr 45° zu der Mittelachse verlaufen.

Dabei kann die Betätigung der Spannbacken selbst durch unterschiedliche Mittel erfolgen. Beispielsweise können Hebel oder teilweise Hebel- oder Kurbel- oder Exzenterantriebe zum Betätigen der Spannbacken eingesetzt werden.

Eine besonders zweckmäßige Lösung sieht vor, daß die Spannbacken zum Erzeugen der Spannkraft durch eine Spanneinrichtung mit einer in Richtung parallel zur Mittelachse wirkenden Betätigungskraft beaufschlagbar sind.

Hinsichtlich der Ausbildung der Spannbacken sind die unterschiedlichsten Möglichkeiten denkbar.

Beispielsweise könnten die Spannbacken einstückig ausgebildet sein.

Aus Gründen eines möglichst variablen Einsatzes einer erfindungsgemäßen Spanneinrichtung ist vorzugsweise vorgesehen, daß jeder Spannbacken einen im Gehäuse geführten Grundbacken und einen auf dem Grundbacken aufsetzbaren Aufsetzbacken aufweist.

Vorzugsweise erstreckt sich ein derartiger Aufsetzbacken ausschließlich außerhalb des Gehäuses und ist somit von außerhalb des Gehäuses auf den Grundbacken montierbar und damit stets je nach zu spannendem Werkstück auswechselbar.

Zur Montage des Aufsetzbackens ist der Grundbacken vorzugsweise so ausgebildet, daß dieser den Führungsabschnitt und einen Montageabschnitt zur Montage des Aufsetzbackens umfaßt.

Besonders vorteilhaft ist es, wenn der Grundbacken einen Stegabschnitt umfaßt, welcher sich zwischen dem Führungsabschnitt und dem Montageabschnitt erstreckt.

Gleichzeitig ist zweckmäßigerweise der Stegabschnitt so ausgebildet, daß dieser einen eine Bewegung des Grundbackens in der Führungsrichtung begrenzenden Durchbruch aufweist.

Hinsichtlich der Einwirkung der Betätigungskraft auf den Spannbacken wurden bislang keine näheren Angaben gemacht. So sieht eine vorteilhafte Lösung vor, daß die Betätigungskraft zur Erzeugung der Spannkraft auf den Grundbacken einwirkt.

Dadurch besteht die Möglichkeit, innerhalb des Gehäuses die Betätigungskraft wirksam werden zu lassen und somit in die Spannkraft umzusetzen.

Zweckmäßigerweise wirkt die Betätigungseinrichtung dabei auf den Stegabschnitt des Grundbackens ein.

Hinsichtlich der Übertragung der Betätigungskraft ist zweckmäßigerweise vorgesehen, daß die Betätigungskraft durch ein Spannrohr übertragbar ist, welches auf eine Spannrohraufnahme am Grundbacken einwirkt.

Zweckmäßigerweise ist dabei die Spannrohraufnahme am Stegabschnitt ausgebildet, so daß das Spannrohr die Betätigungskraft auf den Stegabschnitt übertragen kann.

Hinsichtlich der Ausbildung des Gehäuses wurden bislang keine näheren Angaben gemacht. So könnte es beispielsweise vorgesehen sein, das Gehäuse aus einem Block auszubilden.

Besonders zweckmäßig ist es jedoch für einen Zusammenbau, wenn das Gehäuse mehrteilig ausgebildet ist. Eine vorteilhafte Ausführungsform sieht dabei vor, daß das Gehäuse ein Mittelteil und beiderseits des Mittelteils angeordnete Flansche umfaßt.

Ferner sieht eine vorteilhafte Lösung vor, daß das Gehäuse mehrere um die Mittelachse herum angeordnete Segmente umfaßt, die die Möglichkeit eröffnen, die Herstellung des Gehäuses zu vereinfachen, da die Segmente durch Trennflächen getrennt sind.

Mit derartigen Trennflächen eröffnet der Aufbau des Gehäuses aus mehreren Segmenten die Möglichkeit, daß Trennflächen zwischen den Segmenten durch jeweils eine der Aufnahmen für die Führungsabschnitte der Spannbacken verlaufen und damit bei der Herstellung der Segmente auch die Aufnahmen möglichst einfach herstellbar sind.

Beispielsweise könnten dabei die Trennflächen symmetrisch durch die Aufnahmen hindurchverlaufen. Für einen möglichst vorteilhaften Zusammenbau des Gehäuses mit den Grundbacken hat es sich jedoch als vorteilhaft erwiesen, wenn die Trennflächen asymmetrisch zu den Aufnahmen verlaufen.

Bei den bislang bekannten Ausführungen des Spanneinrichtungen wurde nicht im einzelnen darauf eingegangen, wie sich die Wälzführungen optimal gegen in einem Arbeitsraum einer Werkzeugmaschine eingesetztes Kühl- und/oder Schmiermittel schützen lassen.

Aus diesem Grund ist bei der erfindungsgemäßen Lösung vorgesehen, daß im Bereich einer Frontseite des Gehäuses eine einen Montageabschnitt des Grundbackens umschließende Abdichtung angeordnet ist, mit welcher das Innere des Gehäuses wirksam gegen eindringendes Kühl- und/oder Schmiermittel geschützt werden kann.

Besonders effizient läßt sich die Abdichtung dann gestalten, wenn der Montageabschnitt eine parallel zur Führungsrichtung verlaufende Außenkontur aufweist, an welcher die Abdichtung anliegt, und somit die Außenkontur sich lediglich in der Führungsrichtung und nicht quer zu dieser bewegt, so daß die Abdichtung optimal wirksam ist.

Da bei der erfindungsgemäßen Spanneinrichtung beim Spannen des Werkstücks eine Verschiebung der Spannbacken und somit auch des Werkstücks in der Führungsrichtung erfolgt, ist zweckmäßigerweise der Spanneinrichtung eine Meßeinrichtung zur Bestimmung der Position der Spannbacken zugeordnet, so daß damit die durch die Bewegung der Spannbacken in der Führungsrichtung bedingte Verschiebung des Werkstücks ermittelt und bei der Bearbeitung die daraus resultierende Position des Werkstücks berücksichtigt werden kann.

Dabei könnte die Meßeinrichtung so ausgebildet sein, daß sie die Bewegung der Spannbacken in der Führungsrichtung direkt mißt. Dies hätte jedoch zur Konsequenz, daß die Meßeinrichtung in dem Gehäuse der Spanneinrichtung angeordnet sein müsste.

Aus diesem Grund ist vorteilhafterweise vorgesehen, daß die Meßeinrichtung die Position der Spannbacken in Richtung parallel zur Mittelachse des Gehäuses erfaßt.

Diese Möglichkeit der Erfassung der Position der Spannbacken erlaubt es, in vorteilhafterweise die Meßeinrichtung einer Betätigungseinrichtung für die Spannbacken zuzuordnen.

Dabei könnte die Meßeinrichtung so ausgebildet sein, daß diese für jede der Spannbacken die Position erfaßt.

Zweckmäßigerweise ist jedoch die Meßeinrichtung so ausgebildet, daß sie die Position der Spannbacken gemeinsam erfaßt.

Im einfachsten Fall läßt sich die Meßeinrichtung einem Element einer Betätigungsvorrichtung der Spannbacken, beispielsweise einem Spannrohrs, zuordnen, wobei eine Position der Bewegung des Spannrohrs in Richtung der Mittelachse erfaßt wird.

Um jedoch einen durch eine Deformation des Spannrohrs bei Wirken der Betätigungskraft bedingten Fehler zu vermeiden, ist vorzugsweise vorgesehen, daß der Meßeinrichtung ein Positionsübertragungselement zugeordnet ist, welches im wesentlichen eine Position einer Einwirkungsstelle der Betätigungskraft auf den Grundbacken erfaßt.

Mit dieser Lösung läßt sich ohne eine durch die Betätigungskraft bedingte Deformation die Position der Einwirkungsstelle der Betätigungskraft auf den Grundbacken der Meßeinrichtung übermitteln.

Eine besonders günstige Konstruktion sieht dabei vor, daß das Positionsübertragungselement in dem Spannrohr verläuft.

Darüber hinaus betrifft die Erfindung eine Spindeleinheit für eine Werkzeugmaschine mit einer um eine Spindelachse drehbar gelagerten Spindel, welche eine Spanneinrichtung für ein Werkstück trägt, wobei erfindungsgemäß die Spanneinrichtung entsprechend einem der voranstehenden Ansprüche ausgebildet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Schnitt durch ein erstes Ausführungsbeispiel einer erfindungsgemäßen Spanneinrichtung längs Linie 1-1 in Fig. 2 mit einer dieser Spanneinrichtung zugeordneten Meßeinrichtung;
- Fig. 2: einen Schnitt längs Linie 2-2 in Fig. 1;
- Fig. 3: eine perspektivische Darstellung eines Grundbackens eines erfindungsgemäßen Spannbackens;
- Fig. 4: einen Schnitt ähnlich Fig. 2 mit einem noch nicht mit anderen Segmenten des Gehäuses verbundenen Segment;

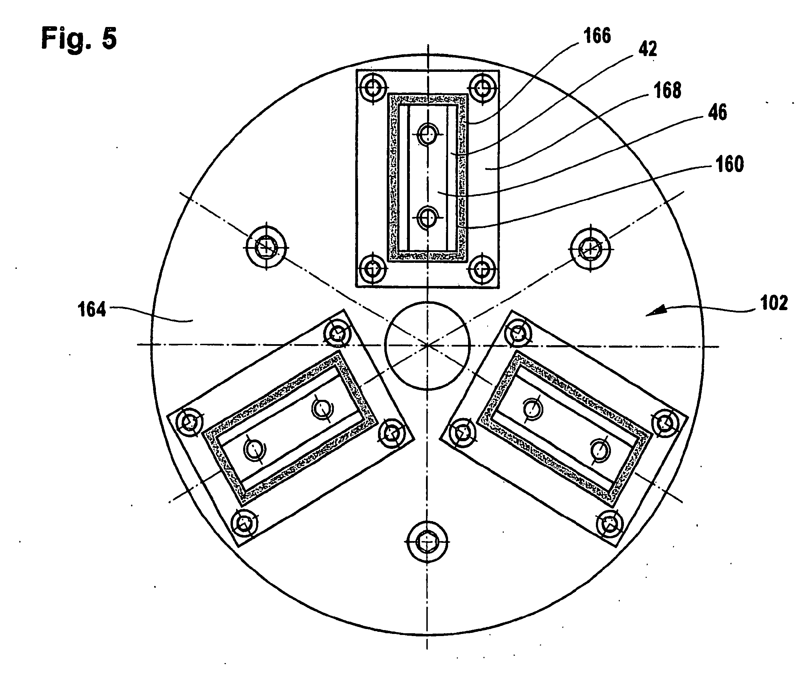

- Fig. 5: eine Draufsicht auf das erste Ausführungsbeispiel der erfindungsgemäßen Spanneinrichtung in Richtung des Pfeils A in Fig. 1 und
- Fig. 6: ein zweites Ausführungsbeispiel einer Spanneinrichtung gemäß dem ersten Ausführungsbeispiel mit einem zugeordneten Meßsystem.

Ein erstes Ausführungsbeispiel einer als Ganzes mit 10 bezeichneten Spanneinrichtung für ein Werkstück 12 umfaßt ein als Ganzes mit 14 bezeichnetes Gehäuse, welches an einer Spindel 16, und zwar an einem stirnseitigen Flansch 18 der Spindel 16, gehalten ist.

Die Spindel 16 ist dabei als Werkstückspindel ausgebildet und um eine Spindelachse 20 rotierend antreibbar.

Ferner ist die Spindel 16 als Hohlspindel mit einem axialen Durchbruch 22 ausgebildet, in welchem ein Spannrohr 24 zum Betätigen der Spanneinrichtung 10 in einer axialen Richtung 26 parallel zur Spindelachse 20 verschiebbar ist.

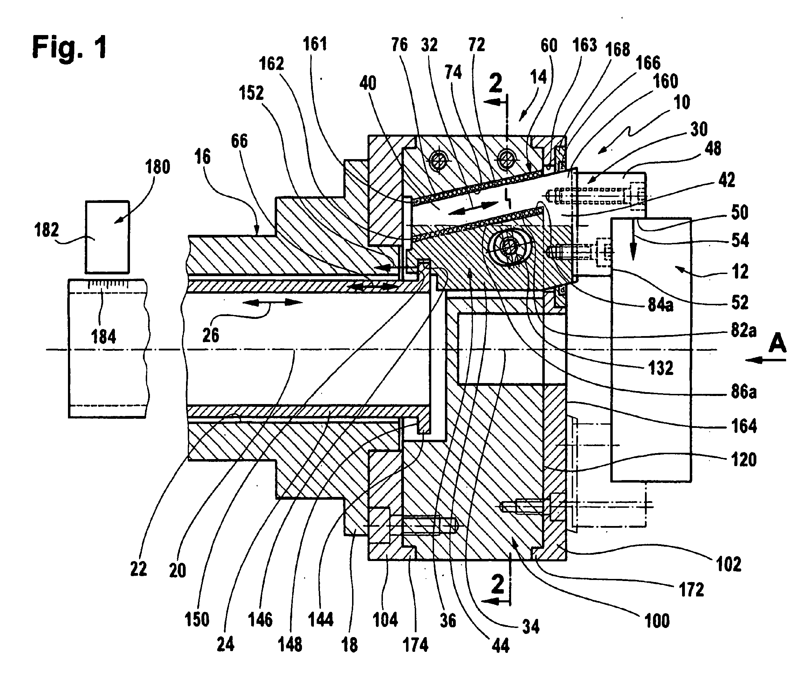

In dem Gehäuse 14 der Spanneinrichtung sind als Ganzes mit 30 bezeichnete Spannbacken in einer Führungsrichtung 32 verschiebbar geführt, wobei die Führungsrichtung 32 bei dem ersten, in Fig. 1 dargestellten Ausführungsbeispiel in einem spitzen Winkel zu einer Mittelachse 34 des Gehäuses 14 verläuft, wobei die Mittelachse 34 im dargestellten Fall mit der Spindelachse 20 zusammenfällt.

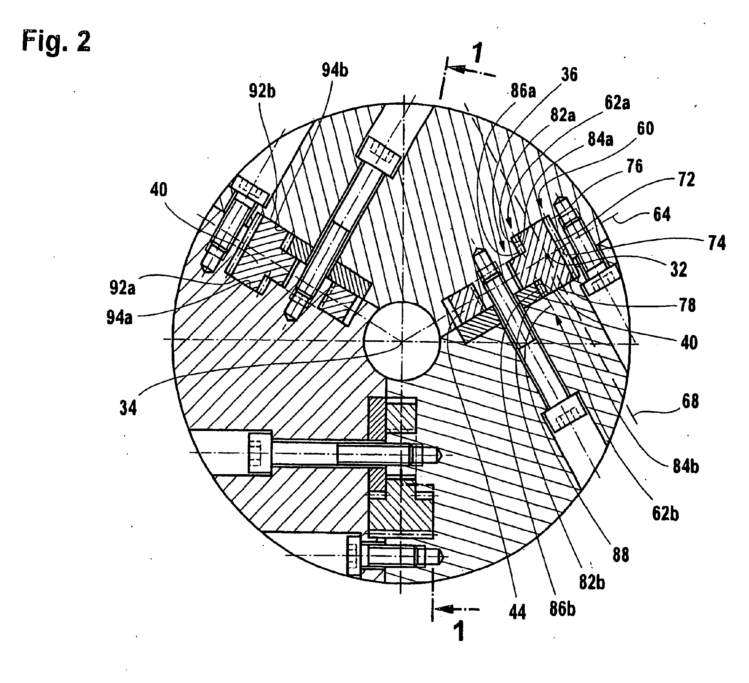

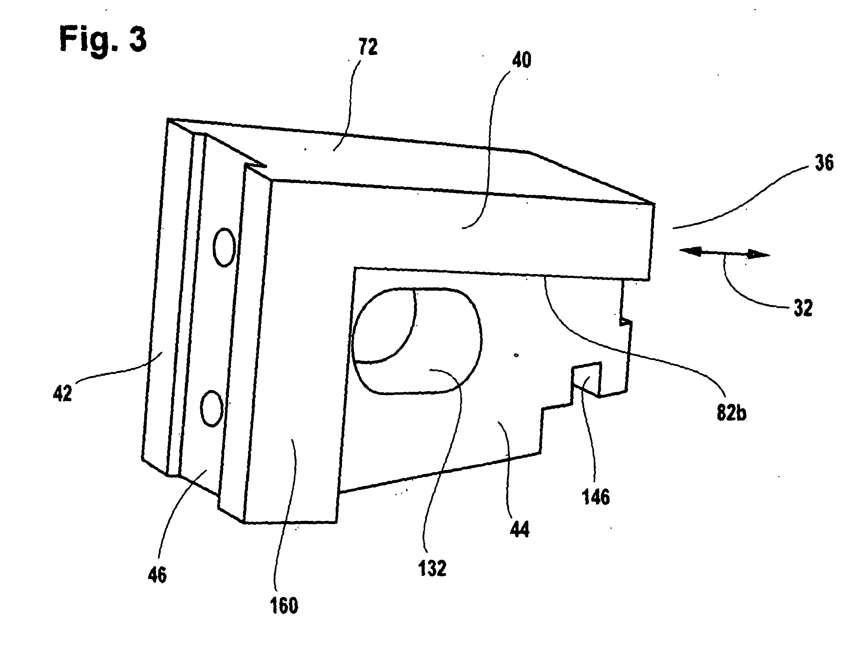

Jeder der Spannbacken 30 umfaßt seinerseits einen in dem Gehäuse 14 gelagerten Grundbacken 36, welcher, wie in Fig. 1 und 2 dargestellt, einen Führungsabschnitt 40, einen Montageabschnitt 42 sowie einen Stegabschnitt 44, wie nochmal perspektivisch in Fig. 3 dargestellt.

Der Montageabschnitt 42 ist dabei mit einer Stirnseite 46 versehen, auf welcher außerhalb des Gehäuses 14 sich erstreckende Aufsetzbacken 48 der Spannbacken 30 lösbar montierbar sind, die ihrerseits jeweils eine Spannfläche 50 zum Spannen des Werkstücks 12 sowie eine axiale Anlegefläche 52 zum Anlegen des Werkstücks 12 aufweisen.

Bei dem in Fig. 1 dargestellten Ausführungsbeispiel wirkt die Spannfläche 50 in radialer Richtung mit einer zur Mittelachse 34 hin gerichteten Spannkraft 54 auf einem Umfangsbereich des Werkstücks 12. Die Spannfläche 50 kann aber auch so angeordnet sein, daß sie in der Lage ist, mit einer radial von der Mittelachse 34 weg gerichteten Spannkraft auf ein Werkstück zu wirken, und dieses beispielsweise in einer inneren Ausnehmung zu spannen.

Die in der Führungsrichtung 32 linear bewegbare Lagerung des jeweiligen Führungsabschnitts 40 des entsprechenden Spannbackens 30 erfolgt mittels einer ersten Wälzführung 60, welche auf den Führungsabschnitt 40 auf einer dem Stegabschnitt 44 abgewandten Seite angeordnet und zur Führung des Führungsabschnitts 40 parallel zur Führungsrichtung 32 wirksam ist.

Ferner erfolgt die Führung des Führungsabschnitts 40 durch zwei zweite Wälzführungen 62a und 62b, welche auf gegenüberliegenden Seiten des Stegabschnitts 44 und auf einer der ersten Wälzführung 60 gegenüberliegenden Seite des Führungsabschnitts 40 angeordnet sind, so daß der Führungsabschnitt 40 zwischen der ersten Wälzführung 60 einerseits und den zweiten Wälzführungen 62a, b andererseits in der Führungsrichtung 32 geführt ist.

Derart angeordnet nehmen die Wälzführungen 60 und 62 Kräfte auf, die quer zur Führungsrichtung 32 wirken und in einer Kraftwirkungsebene 64 liegen, parallel zu welcher auch die Führungsrichtung 32 verläuft, wobei die Führungsrichtung 32 vorzugsweise in der Kraftwirkungsebene 64 liegt.

Die Kraftwirkungsebene 64 ist dabei definiert durch die Ebene, in welcher die Spannkraft 54 liegt, mit welcher der jeweilige Spannbacken 30 auf das Werkstück 12 einwirkt, und in welcher die Führungsrichtung 32 verläuft. Vorzugsweise liegt in der Kraftwirkungsebene 64 auch eine von dem Spannrohr 24 auf den jeweiligen Spannbacken 30 ausgeübte Betätigungskraft 66.

Insbesondere verläuft die Kraftwirkungsebene 64 zumindest parallel zur Mittelachse 34, vorzugsweise durch diese hindurch und somit in diesem Fall in radialer Richtung zur Mittelachse 34.

Ferner bewirken die Wälzführungen 60 und 62 aufgrund ihrer Ausdehnung quer zur Kraftwirkungsebene 64 eine Führung des Führungsabschnitts 40 in definierter Ausrichtung zu einer Führungsebene 68, die sich quer zur Kraftwirkungsebene 64, vorzugsweise senkrecht zu dieser erstreckt. Die definierte Ausrichtung des Führungsabschnitts 40 relativ zur Führungsebene 68 wird dadurch erreicht, daß die zweiten Wälzführungen 62a, 62b beiderseits der Kraftwirkungsebene 64 liegen und sich außerdem die erste Wälzführung 60 quer zur Kraftwirkungsebene 64 über die gesamte Erstreckung des Führungsabschnitts 40 in Richtung der Führungsebene 68 erstreckt und somit beiderseits der Kraftwirkungsebene 64 den Führungsabschnitt 40 führt.

Beim ersten Ausführungsbeispiel wird die erste Wälzführung 60, wie in Fig. 1, 2 und 3 dargestellt, durch eine spannbackenseitige erste Abwälzfläche 72, sowie eine am Gehäuse 14 angeordnete gehäuseseitige erste Abwälzfläche 74 und einen zwischen diesen ersten Abwälzflächen 72 und 74 angeordneten ersten Satz von Wälzkörpern 76, die vorzugsweise als Rollen ausgebildet sind und mit ihren Achsen 78 quer zu der Kraftwirkungsebene 64 und parallel zu einer senkrechten zur Führungsrichtung 32 verlaufen.

Damit stützen die Wälzkörper 76 den Führungsabschnitt 40 eines jeden der Spannbacken 30 unmittelbar am Gehäuse 14 ab.

Ferner umfassen die zweiten Wälzführungen 62a und 62b, wie in Fig. 1, 2 und 3 dargestellt, zweite spannbackenseitige Abwälzflächen 82a und 82b, zweite gehäuseseitige Abwälzflächen 84a und 84b sowie zweite Wälzkörpersätze 86a und 86b, deren Achsen 88 ebenfalls senkrecht zur Führungsrichtung 32 und quer zur Kraftwirkungsebene 64 verlaufen, wobei auch die zweiten Wälzkörpersätze 86a und 86b Rollen als Wälzkörper umfassen.

Darüber hinaus erfolgt noch eine Führung der Führungsabschnitte 40 gegen eine Bewegung in Richtung der Führungsebene 68 durch zwischen den spannbackenseitigen ersten Abwälzflächen 72 und den spannbackenseitigen zweiten Abwälzflächen 82a, b außen am Führungsbereich 40 angeordnete spannbackenseitige Seitenführungsflächen 92a und 92b, welche ihrerseits an gehäuseseitigen Seitenführungsflächen 94a und 94b gleitend anliegen und somit Gleitführungen bilden, die in Richtung der Führungsebene 68 wirksam sind.

Da die Spannkraft 54 sowie die Betätigungskraft 66 jedoch keine wesentlichen quer zur Führungsrichtung 32 und in Richtung der Führungsfläche 68 liegende Kraftkomponenten aufweisen, ist eine Gleitführung zwischen den Seitenführungsflächen 92a und 94a sowie 92b und 94b für eine ausreichende Führung des Führungsabschnitts 40 der Spannbacken 30 ausreichend.

Das Gehäuse 14 umfaßt vorzugsweise ein Mittelteil 100, an welchem auf einer dem Werkstück 12 zugewandten Seite ein frontseitiger Flansch 102 und auf einer dem Werkstück 12 abgewandten Seite ein rückseitiger Flansch 104 aufliegen, wobei das Gehäuse über den rückseitigen Flansch 104 mit dem Flansch 18 der Spindel 16 verbunden ist.

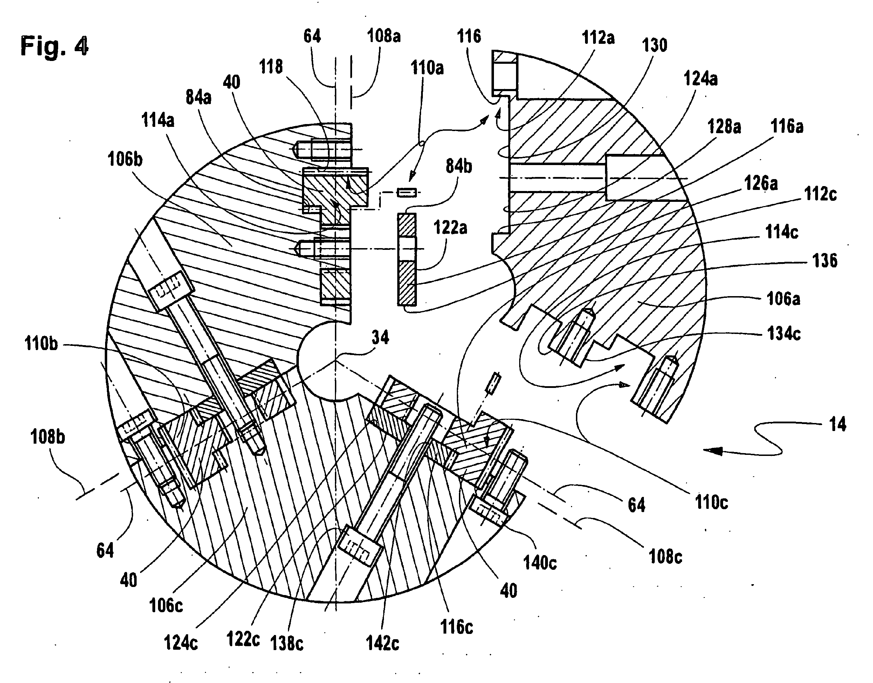

Das Mittelteil 100 ist dabei, wie insbesondere in Fig. 4 dargestellt, aus einer der Zahl der Spannbacken 30 entsprechenden Zahl von Segmenten 106a, 106b und 106c aufgebaut, die längs Trennebenen 108a, 108b und 108c voneinander trennbar sind, wobei die Trennebenen 108a, 108b und 108c vorzugsweise parallel zu den Kraftwirkungsebenen 64 verlaufen.

Die Beispielsweise drei Segmente 106a, 106b und 106c bilden insgesamt drei Aufnahmen 110a, 110b und 110c für mindestens die Führungsabschnitte 40 der Spannbacken 30, wobei jede der Aufnahmen 110a, 110b und 110c durch eine der Trennebenen 108 in einen in einem der Segmente 106, beispielsweise dem Segment 106a, liegenden ersten Aufnahmeabschnitt 112a und einen in dem jeweils anderen Segment 106, beispielsweise dem Segment 106b, liegenden zweiten Aufnahmeabschnitt 114a durch die jeweilige Trennebene 108, in diesem Fall die Trennebene 108a, trennbar ist.

Der erste Aufnahmeabschnitt 112a umfaßt dabei beispielsweise einen Teil 116 der gehäuseseitigen ersten Abwälzfläche 74 und die zweite Aufnahme 114a den weiteren Teil 118 der gehäuseseitigen ersten Abwälzfläche 74.

Ferner umfaßt der zweite Aufnahmeabschnitt 114a noch eine gehäuseseitige zweite Abwälzfläche 84a, während die andere gehäuseseitige zweite Abwälzfläche 84b an einem Einsatz 116 gehalten ist, welcher in den ersten Aufnahmeabschnitt 112 einsetzbar und formschlüssig in diesem fixierbar ist, jedoch erst nach Verbinden des Segments 106a mit den übrigen Segmenten 106b und 106c.

Der Einsatz 116 erlaubt dabei beispielsweise den zweiten Aufnahmeabschnitt 114c im Segment 106a mit dem ersten Aufnahmeabschnitt 112c des Segments 106c bei eingesetztem Führungsabschnitt 40 des Spannbackens 30 zur Aufnahme 110c zusammenzuführen, und zwar durch eine Bewegung senkrecht zur Trennebene 108c, ohne daß hierdurch eine Behinderung durch den Führungsabschnitt 40 in der Aufnahme 110a entsteht, da der Aufnahmeabschnitt 112a aufgrund des nicht in diesen eingeführten Einsatzes 116 einen Freiraum 119 aufweist, welcher später durch Einführen des Einsatzes 116 über eine Frontseite 120 der Segmente 106 verschließbar ist.

Zur präzisen Positionierung des Einsatzes 116 weist dieser, wie in Fig. 4 dargestellt, eine seitliche Anlagefläche 122 auf, welche an einer Seitenfläche 124 des ersten Aufnahmeabschnitts 112a anlegbar ist und eine der gehäuseseitigen zweiten Abwälzfläche 84b gegenüberliegende Stützfläche 126, welche auf einer Auflagefläche 128a des ersten Aufnahmeabschnitts 112a auflegbar ist, so daß die gehäuseseitige zweite Abwälzfläche 84b bei in den ersten Aufnahmeabschnitt 112a eingesetztem Einsatz 116 präzise positioniert ist.

Zur Begrenzung der Bewegung des Grundbackens 36 mit dem Führungsabschnitt 40 und dem Montageabschnitt 42 ist der Stegabschnitt desselben mit einem Durchbruch 132 versehen, welcher in der Führungsrichtung 32 langgezogen ist.

Der Durchbruch 132 wird durchsetzt von einem zylindrischen Vorsprung 134 der jeweiligen Aufnahme 110, welcher in Fig. 4 als Vorsprung 134c der Aufnahme 110c erkennbar ist. Dieser zylindrische Vorsprung 134 ist Teil des jeweiligen zweiten Aufnahmeabschnitts 114 und mit seiner Stirnseite 136 so angeordnet, daß mit diesem der Einsatz, in Fig. 4 der Einsatz 116c auf seiner der seitlichen Anlagefläche 122c gegenüberliegenden Seite beaufschlagbar ist, um die seitliche Anlagefläche 122c an die Seitenfläche 124c kraftbeaufschlagt anzulegen.

Besonders günstig ist es zur Verbindung der Segmente 106a, 106b und 106c miteinander, wenn der zylindrische Vorsprung 134 von einer Spannschraube 138, beispielsweise der Spannschraube 138c, durchsetzt ist, welche sich quer zur jeweiligen Trennebene 108, in diesem Fall quer zur Trennebene 108c erstreckt und die beiden beiderseits der Trennebene 108, in diesem Fall beiderseits der Trennebene 108c liegenden Segmente 106c und 106a, mit einer senkrecht zur Trennebene 108, in diesem Fall senkrecht zur Trennebene 108c, wirkenden Kraft gegeneinander verspannt.

Ferner ist zusätzlich noch eine weitere Spannschraube 140c vorgesehen, welche beispielsweise bezüglich der Mittelachse 34 radial außerhalb der jeweiligen Aufnahme 110, in diesem Fall der Aufnahme 110c, die Segmente 106, in diesem Fall die Segmente 106c und 106a, ebenfalls mit einer senkrecht zur jeweiligen Trennebene 108, in diesem Fall der Trennebene 108c, wirkenden Kraft gegeneinander verspannt.

Außerdem dient die Spannschraube 138, in Fig. 4 beispielsweise die Spannschraube 138c, dazu, gleichzeitig auch den Einsatz 116, in diesem Fall den Einsatz 116c im Bereich eines Durchbruchs 142c zu durchgreifen und somit auch diesen relativ zu den Segmenten 106, in diesem Fall den Segmenten 106c und 106a, festzulegen.

Somit ist der den Führungsabschnitt 40, den Montageabschnitt 42 und den Stegabschnitt 44 umfassende Grundbacken 36, wie in Fig. 1 dargestellt, in der Führungsrichtung 32 durch die Ausdehnung des Durchbruchs 132 in Führungsrichtung 32 begrenzt verschiebbar, wobei die in der Kraftwirkungsebene 64 wirkenden Kräfte und Momente, das heißt insbesondere die durch die Spannkraft 54 und die Betätigungskraft 66 wirkenden Kräfte und Kippmomente durch die erste Wälzführung 60 und die zweiten Wälzführungen 62a und b im wesentlichen aufgenommen werden.

Durch die Ausrichtung der Führungsrichtung 32 in einem spitzen Winkel zur Mittelachse 34 bewegt sich der gesamte Spannbacken 30 mit der Spannfläche 50 einerseits in radialer Richtung zur Mittelachse 34 andererseits aber auch in Richtung zur Mittelachse 34, wobei lediglich die radiale Bewegung zum Spannen des Werkstücks 12 eingesetzt wird.

In gleicher Weise bewegt sich somit auch der Grundbacken 36 einerseits in radialer Richtung zur Mittelachse 34 andererseits in axialer Richtung zur Mittelachse 34, so daß sich die von dem Spannrohr 24 auszuübende Betätigungskraft66 in einfacher Weise durch einen Spannrohrflansch 144 auf den Grundbacken 36 übertragen läßt, welcher in eine Flanschaufnahme 146 im Grundbacken 36, vorzugsweise vorgesehen im Stegabschnitt 44, eingreift und sich in dieser Flanschaufnahme 146 radial zur Mittelachse 34 bewegen kann, dabei jedoch in jeder Stellung mit einer Flanschfläche 148 auf eine entsprechende Druckfläche 150 der Flanschaufnahme 146 dann einwirkt, wenn der Spannrohrflansch 144 den Grundbacken 36 in einer Spannrichtung 152 beaufschlagt, die vom Werkstück 12 weg und somit in Richtung des Flansches 18 der Spindel gerichtet ist, wenn die Spannkraft 54 radial auf die Mittelachse 34 zugerichtet ist, während die Spannrichtung 152 in Richtung des Werkstücks 12 und somit vom Flansch 18 der Spindel 16 weg gerichtet wäre, wenn die Spannkraft 54 bezüglich der Mittelachse 34 radial nach außen gerichtet wäre.

In dem in Fig. 1 dargestellten Fall ist somit die gelöste Stellung der Spannbacken 30 immer diejenige, in welcher die Spannbacken 30 maximal in Richtung des Werkstücks 12 und somit in Richtung weg vom Flansch 18 der Spindel 16 verschoben sind.

Um nun sicherzustellen, daß in dieser gelösten Stellung der Spannbacken 30 die Wälzkörpersätze 76 sowie 86a und 86b stets so stehen, daß sie sich durch die Relativbewegung des Führungsabschnitts 40 zur jeweiligen Aufnahme 110 abwälzend bewegen können, sind zwischen den ersten Abwälzflächen 72 und 74 sowie den zweiten Abwälzflächen 82 a und 84a sowie 82b und 84b in einem hinteren, das heißt dem rückseitigen Flansch 104 zugewandten Endabschnitt derselben, elastische Elemente 161 und 162 vorgesehen, welche bewirken, daß in der gelösten Stellung, in welcher die Wälzkörpersätze 76 sowie 86a und 86b weder durch die Betätigungskraft 66 noch die Spannkraft 54 beaufschlagt sind, die einzelnen Wälzkörper dieser Wälzkörpersätze 76 sowie 86a und 86b aneinanderliegend verbleiben, um beim Verschieben des Führungsabschnitts 40 in Richtung des rückseitigen Flansches 104 ausreichend Raum zur Durchführung der Abwälzbewegung zur Verfügung haben.

Wie in Fig. 1 dargestellt, hat bei dem ersten Ausführungsbeispiel der Montageabschnitt 42 eine Außenkontur 160, welche parallel zur Führungsrichtung 32 verläuft, wobei sich die Außenkontur 160 durch einen in dem frontseitigen Flansch 102 vorgesehenen Durchbruch 163 hindurcherstreckt, so daß die Stirnseite 46 des Montageabschnitts 42 in Richtung der Mittelachse 34 über den frontseitigen Flansch 102 übersteht oder mindestens mit einer Frontseite 164 desselben fluchtet.

Um nun das Innere des Gehäuses 14 gegenüber auf die Frontseite 164 des frontseitigen Flansches 102 einwirkenden Medien, insbesondere gegenüber beim Bearbeiten des Werkstücks 12 eingesetzten Schmier- oder Kühlflüssigkeiten abzudichten, liegt an der Außenkontur 160 eines jeden der Grundbacken 36 eine umlaufende Dichtung 166 an, die in einem Dichtungsrahmen 168 gehalten ist. Die Dichtung 166 ist dabei derart ausgebildet, daß diese in jeder Stellung des Grundbackens 36 an der Außenkontur 160 anliegt, die sich mit jedem Oberflächenbereich parallel zur Führungsrichtung 32 und somit in einem spitzen Winkel zur Mittelachse 34 bewegt.

Aus diesem Grund ist der jeweilige Durchbruch 163 für den jeweiligen Montageabschnitt 42 in dem frontseitigen Flansch 102 größer auszuführen, da der frontseitige Flansch 102 in axialer Richtung, das heißt parallel zur Mittelachse 34, auf das Mittelteil 100 aufsetzbar sein soll, so daß der Dichtungsrahmen 168 jeweils erst nach Aufsetzen des frontseitigen Flansches 102 an diesem frontseitigen Flansch 102 montiert wird, der in diesem Fall in einer zur Führungsrichtung 32 parallelen Richtung über die Außenkontur 160 des Montageabschnitts 42 schiebbar ist, wobei die Dichtung 166 in der am frontseitigen Flansch 102 montierten Stellung der Dichtungsrahmen 168 an der Außenkontur 160 anliegt. Die Relativbewegung zwischen der Dichtung 166 und der Außenkontur 160 erfolgt dabei ausschließlich in der Führungsrichtung 32 und somit kann ein dichter Abschluß im Bereich der Dichtung 166 gewährleistet werden, da sich der Montageabschnitt 42 mit der Außenkontur 160 nur in der Führungsrichtung 32 und nicht quer zu dieser bewegt.

Um außerdem bei rotierender Spindel 16 das Mittelteil 100 zusätzlich gegen radial zur Mittelachse 34 wirkende Trägheitskräfte zu sichern, sind vorzugsweise sowohl der frontseitige Flansch 102 als auch der rückseitige Flansch 104 mit radial umlaufenden Vorsprüngen 172 bzw. 174 versehen, mit welchen diese das Mittelteil 100 radial außenliegend formschlüssig umgreifen und somit eine formschlüssige Sicherung der Segmente 106a, 106b und 106c gegen radiale Bewegungen derselben relativ zueinander und relativ zu der Mittelachse 34 darstellen.

Da - wie bereits bei diesem Ausführungsbeispiel im Detail erläutert - die Spannbacken 30 sowohl eine Bewegung in Richtung der Mittelachse 34 als auch eine Bewegung radial zu dieser durchführen, hat das Beaufschlagen des Werkstücks 12 mit der Spannkraft 54 zur Konsequenz, daß sich das Werkstück 12, an den axialen Anlageflächen 52 anliegend beim Spannen in Richtung parallel zur Mittelachse 34 bewegt, und zwar bei dem in Fig. 1 dargestellten Ausführungsbeispiel, bei welchem auf die Mittelachse 34 zu gerichtete Spannkräfte 54 auftreten, in Richtung des Gehäuses 14.

Insbesondere dann, wenn die Führungsrichtung 32 in einem Winkel gegenüber der Mittelachse 34 geneigt ist, der kleiner als 45° ist, beispielsweise in der Größenordnung von 30° liegt, ist die Bewegung in Richtung parallel zur Mittelachse größer als die Bewegung der Spannfläche 50 in Richtung quer zur Mittelachse 34 zu, so daß das Werkstück 12 bei Spannen eine nennenswerte Verschiebung in Richtung der Mittelachse 34 und somit auch in Richtung der Spindelachse 20 erfährt.

Um diese axiale Bewegung exakt erfassen zu können, ist es vorteilhaft, die Position des Spannrohrs 26 durch eine Meßeinrichtung 180 zu erfassen, welche beispielsweise einen Sensor 182 und einen relativ zum Sensor 182 bewegenden Maßstab 184 umfaßt.

In diesem Fall besteht allerdings das Problem, daß sich das Spannrohr 24 aufgrund der auf dieses einwirkenden Betätigungskraft 66 dehnt, so daß die von der Meßeinrichtung 180 erfaßte Position mit einem durch die Dehnung bedingten Fehler des Spannrohrs 24 abhängig von der Betätigungskraft 66 behaftet ist.

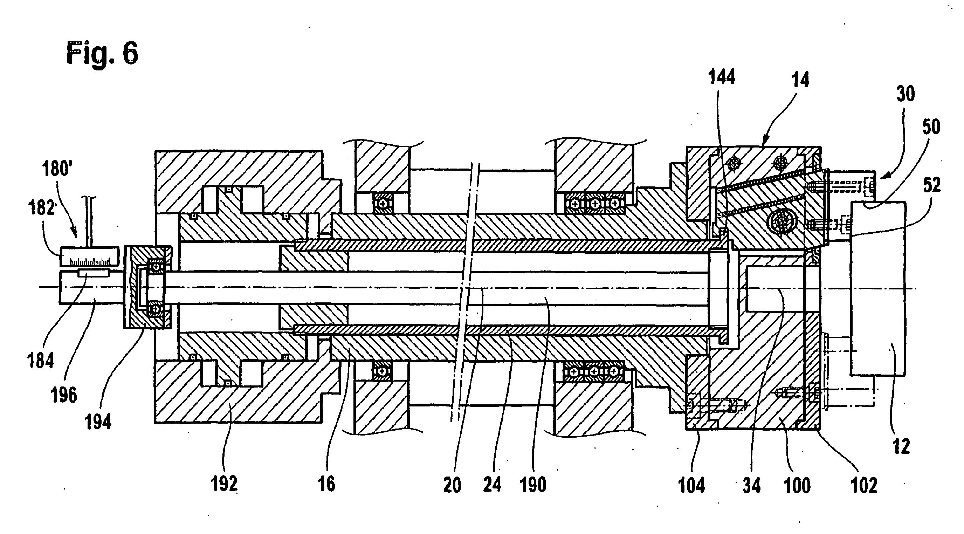

Aus diesem Grund sieht ein zweites, in Fig. 6 dargestelltes Ausführungsbeispiel vor, daß innerhalb des Spannrohrs 24 ein Positionsübertragungselement 190 angeordnet ist, welches mit dem Spannrohr 24 im Bereich des Spannrohrflansches 144, vorzugsweise unmittelbar mit dem Spannrohrflansch 144, verbunden ist und durch dieses sowie durch einen Spannzylinder 192 hindurchgeführt ist und über ein Drehlager 194 mit einer Meßeinrichtung 180' gekoppelt ist, welche ebenfalls einen Sensor 182 und einen relativ zum Sensor bewegbaren Maßstab 184 umfaßt, der an einem drehfest mit dem Positionsübertragungselement über das Drehlager 194 verbundenen Positionsanzeigeelement 196 sitzt, welches aufgrund des Drehlagers 194 und des darüber mit diesem verbundenen Positionsübertragungselements 190 sämtlichen Bewegungen des Spannrohrflansches 144 folgt und somit den Maßstab 184 relativ zum Sensor 182 entsprechend den Bewegungen des Spannrohrflansches 144 in Richtung der Mittelachse 34 verschiebt, so daß die Meßeinrichtung 180' in der Lage ist, ohne den durch Dehnungen des Spannrohrs 24 bedingten Fehler die Position der Spannbacken 30 bezogen auf die Mittelachse 34 und relativ zum Gehäuse 14 exakt zu erfassen und damit auch die Position des Werkstücks 12 in einem Arbeitsraum und relativ zu einem Werkzeug exakt zu ermitteln, selbst wenn das Werkstück 12 aufgrund des Spannens mittels der Spannbacken 30 eine Verschiebung in Richtung parallel zur Mittelachse 34 erfährt.

## Patentansprüche

1. Spanneinrichtung für eine um eine Spindelachse (20) rotierend antreibbare Spindel (16) zum Spannen von Werkstücken (12), umfassend ein um die Spindelachse (20) rotierend bewegbares Gehäuse (14) und in dem Gehäuse (14) in Führungen (60, 62) in einer Führungsrichtung (32) bewegbar geführte Spannbacken (30),
**dadurch gekennzeichnet, dass** die Führungen als Wälzführungen (60, 62) ausgebildet sind und dass jede Führung einen Führungsabschnitt (40) des jeweiligen Spannbackens (30) zwischen mindestens zwei Wälzführungen (60, 62) führt, die sich parallel zu der Führungsrichtung (32) erstrecken.

2. Spanneinrichtung nach Anspruch 1, **dadurch gekennzeichnet, dass** die Wälzführungen (60, 62) den Führungsabschnitt (40) gegen eine Bewegung in Richtung quer zur Führungsrichtung (32) und parallel zu einer Kraftwirkungsebene (64) abgestützt führen.

3. Spanneinrichtung nach Anspruch 1 oder 2, **dadurch gekennzeichnet, daß** die Wälzführungen (60, 62) so ausgebildet und angeordnet sind, daß sie auf den Führungsabschnitt (40) quer zur Führungsrichtung (32) und parallel zu einer Kraftwirkungsebene (64) verlaufende Querkräfte aufnehmen.

4. Spanneinrichtung nach einem der vorstehenden Ansprüche, **dadurch gekennzeichnet, daß** die Wälzführungen (60, 62) als durch die Spannkraft (54) auf den Führungsabschnitt (40) wirkende Kippmomente aufnehmend ausgebildet sind.

5. Spanneinrichtung nach einem der voranstehenden Ansprüche, **dadurch gekennzeichnet, daß** die Wälzführungen (60, 62) in entgegengesetzten Richtungen quer zur Führungsrichtung (32) und parallel zu einer Kraftwirkungsebene (64) wirkende Kräfte aufnehmend ausgebildet sind.

6. Spanneinrichtung nach einem der voranstehenden Ansprüche, **dadurch gekennzeichnet, daß** die mindestens zwei Wälzführungen (60, 62) den Führungsabschnitt (40) zur Kraftwirkungsebene (64) symmetrisch abstützen.

7. Spanneinrichtung nach einem der voranstehenden Ansprüche, **dadurch gekennzeichnet, daß** die Wälzführungen (60, 62) die Führungsabschnitte (40) parallel zu einer durch die Führungsrichtung (32) hindurch und quer zu einer Kraftwirkungsebene (64) verlaufenden Führungsebene (68) ausgerichtet führen.

8. Spanneinrichtung nach einem der Ansprüche 2 bis 7, **dadurch gekennzeichnet, daß** die Kraftwirkungsebene (64) parallel zu einer Mittelachse (34) der Spanneinrichtung verläuft.

9. Spanneinrichtung nach Anspruch 8, **dadurch gekennzeichnet, daß** die Kraftwirkungsebene (64) durch die Mittelachse (34) der Spanneinrichtung hindurch verläuft.

10. Spanneinrichtung nach einem der voranstehenden Ansprüche, **dadurch gekennzeichnet, daß** der Führungsabschnitt (40) auf einer ersten Seite mit einer ersten Wälzführung (60) geführt ist.

11. Spanneinrichtung nach einem der voranstehenden Ansprüche, **dadurch gekennzeichnet, daß** der Führungsabschnitt (40) auf einer zweiten der ersten Seite gegenüberliegenden Seite durch mindestens eine zweite Wälzführung (62) geführt ist.

12. Spanneinrichtung nach Anspruch 11, **dadurch gekennzeichnet, daß** der Führungsabschnitt (40) auf der zweiten Seite durch zwei im Abstand voneinander angeordnete zweite Wälzführungen (62a, 62b) geführt ist.

13. Spanneinrichtung nach einem der Ansprüche 10 bis 12, **dadurch gekennzeichnet, daß** der Führungsabschnitt (40) auf der ersten Seite eine erste Abwälzfläche (72) für Wälzkörper (76) der ersten Wälzführung (60) aufweist.

14. Spanneinrichtung nach einem der Ansprüche 10 bis 13, **dadurch gekennzeichnet, daß** der Führungsabschnitt (40) auf der zweiten Seite mindestens eine zweite Abwälzfläche (82) für Wälzkörper (86) der mindestens einen zweiten Wälzführung (62) aufweist.

15. Spanneinrichtung nach Anspruch 14, **dadurch gekennzeichnet, daß** der Führungsabschnitt (40) auf der zweiten Seite zwei zweite Abwälzflächen (82a, b) für Wälzkörper (86a, b) der zweiten Wälzführungen (62a, b) aufweist.

16. Spanneinrichtung nach einem der voranstehenden Ansprüche, **dadurch gekennzeichnet, daß** das Gehäuse (14) eine Aufnahme (110) für jeden Führungsabschnitt (40) eines jeden Spannbacken (30) aufweist.

17. Spanneinrichtung nach Anspruch 16, **dadurch gekennzeichnet, daß** die Aufnahme (110) eine gehäuseseitige erste Abwälzfläche (74) für die Wälzkörper (76) der ersten Wälzführung (60) aufweist.

18. Spanneinrichtung nach Anspruch 16 oder 17, **dadurch gekennzeichnet, daß** die Aufnahme (110) mindestens eine gehäuseseitige zweite Abwälzfläche (84) für die Wälzkörper (86) der mindestens einen zweiten Wälzführung (62) aufweist.

19. Spanneinrichtung nach Anspruch 18, **dadurch gekennzeichnet, daß** die Aufnahme (110) zwei gehäuseseitige zweite Abwälzflächen (84a, 84b) für die Wälzkörper (86a, 86b) der zweiten Wälzführungen (62a, b) aufweist.

20. Spanneinrichtung nach einem der voranstehenden Ansprüche, **dadurch gekennzeichnet, daß** die Führungsrichtungen (32) der Spannbacken (30) in einem spitzen Winkel zu einer Mittelachse (34) des Gehäuses (14) verlaufen.

21. Spanneinrichtung nach Anspruch 20, **dadurch gekennzeichnet, daß** die Führungsrichtungen (32) der Spannbacken (30) in einem Winkel von maximal ungefähr 60° zu der Mittelachse (34) des Gehäuses (14) verlaufen.

22. Spanneinrichtung nach Anspruch 20 oder 21, **dadurch gekennzeichnet, daß** die Führungsrichtungen (32) der Spannbacken (30) in einem spitzen Winkel von maximal ungefähr 45° zu der Mittelachse (34) des Gehäuses (14) verlaufen.

23. Spanneinrichtung nach einem der voranstehenden Ansprüche, **dadurch gekennzeichnet, daß** die Spannbacken (30) zum Erzeugen der Spannkraft (54) mit einer in Richtung parallel zur Mittelachse (34) wirkenden Betätigungskraft (66) beaufschlagbar sind.

24. Spanneinrichtung nach einem der voranstehenden Ansprüche, **dadurch gekennzeichnet, daß** die Spannbacken (30) einen in dem Gehäuse (14) geführten Grundbacken (36) und einen auf den Grundbacken (36) aufsetzbaren Aufsetzbacken (48) aufweisen.

25. Spanneinrichtung nach Anspruch 24, **dadurch gekennzeichnet, daß** sich der Aufsetzbacken (48) außerhalb des Gehäuses (14) erstreckt.

26. Spanneinrichtung nach Anspruch 24 der 25, **dadurch gekennzeichnet, daß** der Grundbacken (36) den Führungsabschnitt (40) und einen Montageabschnitt (42) zur Montage des Aufsetzbackens (48) umfaßt.

27. Spanneinrichtung nach einem der Ansprüche 24 bis 26, **dadurch gekennzeichnet, daß** der Grundbacken (36) einen Stegabschnitt (44) umfaßt, welcher sich zwischen dem Führungsabschnitt (40) und dem Montageabschnitt (42) erstreckt.

28. Spanneinrichtung nach Anspruch 27, **dadurch gekennzeichnet, daß** der Stegabschnitt (44) einen eine Bewegung des Grundbackens (36) in der Führungsrichtung (32) begrenzenden Durchbruch (132) aufweist.

29. Spanneinrichtung nach einem der Ansprüche 24 bis 28, **dadurch gekennzeichnet, daß** die Betätigungskraft (66) zur Erzeugung der Spannkraft (54) auf den Grundbacken (36) einwirkt.

30. Spanneinrichtung nach Anspruch 29, **dadurch gekennzeichnet, daß** die Betätigungskraft (66) auf den Stegabschnitt (44) einwirkt.

31. Spanneinrichtung nach Anspruch 29 oder 30, **dadurch gekennzeichnet, daß** die Betätigungskräfte (66) durch ein Spannrohr (24) übertragbar ist, welches auf eine Spannrohraufnahme (146) am Grundbacken (36) wirkt.

32. Spanneinrichtung nach Anspruch 31, **dadurch gekennzeichnet, daß** die Spannrohraufnahme (146) im Stegabschnitt (44) ausgebildet ist.

33. Spanneinrichtung nach einem der voranstehenden Ansprüche, **dadurch gekennzeichnet, daß** das Gehäuse (14) mehrteilig ausgebildet ist.

34. Spanneinrichtung nach Anspruch 33, **dadurch gekennzeichnet, daß** das Gehäuse (14) ein Mittelteil (100) und beiderseits des Mittelteils (100) angeordnete Flansche (102, 104) aufweist.

35. Spanneinrichtung nach Anspruch 33 oder 34, **dadurch gekennzeichnet, daß** das Gehäuse (14) mehrere um die Mittelachse (34) herum angeordnete Segmente (106) umfaßt.

36. Spanneinrichtung nach Anspruch 35, **dadurch gekennzeichnet, daß** Trennflächen (108) zwischen den Segmenten (106) durch jeweils eine Aufnahme (110) für die Führungsabschnitte (40) der Spannbacken (30) verlaufen.

37. Spanneinrichtung nach einem der voranstehenden Ansprüche, **dadurch gekennzeichnet, daß** im Bereich einer Frontseite (164) des Gehäuses (14) eine den Montageabschnitt (42) des Grundbackens (36) umschließende Abdichtung (166) angeordnet ist.

38. Spanneinrichtung nach Anspruch 37, **dadurch gekennzeichnet, daß** der Montageabschnitt (42) eine parallel zur Führungsrichtung (32) verlaufende Außenkontur (160) aufweist.

39. Spanneinrichtung nach einem der voranstehenden Ansprüche, **dadurch gekennzeichnet, daß** der Spanneinrichtung eine Meßeinrichtung (180) zur Bestimmung einer Position der Spannbacken (30) zugeordnet ist.

40. Spanneinrichtung nach Anspruch 39, **dadurch gekennzeichnet, daß** die Meßeinrichtung (180) die Position der Spannbacken (30) in Richtung parallel zur Mittelachse (34) des Gehäuses erfaßt.

41. Spanneinrichtung nach Anspruch 40, **dadurch gekennzeichnet, daß** die Meßeinrichtung (180) die Position der Spannbacken (30) gemeinsam erfaßt.

42. Spanneinrichtung nach einem der Ansprüche 39 bis 41, **dadurch gekennzeichnet, daß** der Meßeinrichtung (180) ein Positionsübertragungselement (190) zugeordnet ist, welches im wesentlichen eine Position einer Einwirkungsstelle (146) der Betätigungskraft (66) auf den Grundbacken erfaßt.

43. Spanneinrichtung nach Anspruch 42, **dadurch gekennzeichnet, daß** das Positionsübertragungselement (190) in dem Spannrohr (24) angeordnet ist.

44. Spindeleinheit für eine Werkzeugmaschine mit einer um eine Spindelachse (20) drehbar gelagerten Spindel (16), welche eine Spanneinrichtung (10) für ein Werkstück (12) trägt, **dadurch gekennzeichnet, daß** die Spanneinrichtung (10) nach einem der Ansprüche 1 bis 43 ausgebildet ist.

## Claims

1. Clamping device for a spindle (16) which can be driven in rotation about a spindle axis (20) for clamping workpieces (12), comprising a housing (14) which can be moved in rotation about the spindle axis (20) and clamping jaws (30) which are guided so as to move in the housing (14) in guides (60, 62) in a guide direction (32),
**characterised in that** the guides are formed as roller guides (60, 62), and that each guide guides a guide portion (40) of the respective clamping jaw (30) between at least two roller guides (60, 62) which extend parallel to the guide direction (32).

2. Clamping device according to Claim 1, **characterised in that** the roller guides (60, 62) guide the guide portion (40) in a supported manner against a movement in the direction transverse to the guide direction (32) and parallel to a force application plane (64).

3. Clamping device according to Claim 1 or 2, **characterised in that** the roller guides (60, 62) are formed and disposed so that they absorb transverse forces on the guide portion (40) which extend transversely to the guide direction (32) and parallel to a force application plane (64).

4. Clamping device according to any one of the preceding Claims, **characterised in that** the roller guides (60, 62) are formed so as to absorb tilting moments acting on the guide portion (40) through the clamping force (54).

5. Clamping device according to any one of the preceding Claims, **characterised in that** the roller guides (60, 62) are formed so as to absorb forces acting in opposite directions transversely to the guide direction (32) and parallel to a force application plane (64).

6. Clamping device according to any one of the preceding Claims, **characterised in that** the at least two roller guides (60, 62) support the guide portion (40) symmetrically relative to the force application plane (64).

7. Clamping device according to any one of the preceding Claims, **characterised in that** the roller guides (60, 62) guide the guide portions (40) parallel to a guide plane (68) extending through the guide direction (32) and transversely to a force application plane (64).

8. Clamping device according to any one of Claims 2 to 7, **characterised in that** the force application plane (64) extends parallel to a central axis (34) of the clamping device.

9. Clamping device according to Claim 8, **characterised in that** the force application plane (64) extends through the central axis (34) of the clamping device.

10. Clamping device according to any one of the preceding Claims, **characterised in that** the guide portion (40) is guided on a first side by a first roller guide (60).

11. Clamping device according to any one of the preceding Claims, **characterised in that** the guide portion (40) is guided on a second side lying opposite the first side by at least one second roller guide (62).

12. Clamping device according to Claim 11, **characterised in that** the guide portion (40) is guided on the second side by two second roller guide (62a, 62b) disposed at a spacing from one another.

13. Clamping device according to any one of Claims 10 to 12, **characterised in that** on the first side the guide portion (40) has a first rolling surface (72) for rolling bodies (76) of the first roller guide (60).

14. Clamping device according to any one of Claims 10 to 13, **characterised in that** on the second side the guide portion (40) has at least one second rolling surface (82) for rolling bodies (86) of the at least one second roller guide (62).

15. Clamping device according to Claim 14, **characterised in that** on the second side the guide portion (40) has two second rolling surfaces (82a, b) for rolling bodies (86a, b) of the second roller guides (62a, b).

16. Clamping device according to any one of the preceding Claims, **characterised in that** the housing (14) has a seating (110) for each guide portion (40) of each clamping jaw (30).

17. Clamping device according to Claim 16, **characterised in that** the seating (110) has a first rolling surface (74) on the housing side for the rolling bodies (76) of the first roller guide (60).

18. Clamping device according to Claim 16 or 17, **characterised in that** the seating (110) has at least one second rolling surface (84) on the housing side for the rolling bodies (86) of the at least one second roller guide (62).

19. Clamping device according to Claim 18, **characterised in that** the seating (110) has two second rolling surfaces (84a, 84b) on the housing side for the rolling bodies (86a, 86b) of the second roller guides (62a, b).

20. Clamping device according to any one of the preceding Claims, **characterised in that** the guide directions (32) of the clamping jaws (30) extend at an acute angle to a central axis (34) of the housing (14).

21. Clamping device according to Claim 20, **characterised in that** the guide directions (32) of the clamping jaws (30) extend at an angle of approximately 60° at most to the central axis (34) of the housing (14).

22. Clamping device according to Claim 20 or 21, **characterised in that** the guide directions (32) of the clamping jaws (30) extend at an acute angle of approximately 45° at most to the central axis (34) of the housing (14).

23. Clamping device according to any one of the preceding Claims, **characterised in that** the clamping jaws (30) can be acted upon by an actuating force (66) acting in a direction parallel to the central axis (34) in order to produce the clamping force (54).

24. Clamping device according to any one of the preceding Claims, **characterised in that** the clamping jaws (30) have a base jaw (36) which is guided in the housing (14) and a top jaw (48) which can be positioned on the base jaw (36).

25. Clamping device according to Claim 24, **characterised in that** the top jaw (48) extends outside of the housing (14).

26. Clamping device according to Claim 24 or 25, **characterised in that** the base jaw (36) comprises the guide portion (40) and a mounting portion (42) for mounting the top jaw (48).

27. Clamping device according to any one of Claims 24 to 26, **characterised in that** the base jaw (36) comprises a web portion (44) which extends between the guide portion (40) and the mounting portion (42).

28. Clamping device according to Claim 27, **characterised in that** the web portion (44) has an aperture (132) which limits a movement of the base jaw (36) in the guide direction (32).

29. Clamping device according to any one of Claims 24 to 28, **characterised in that** the actuating force (66) for producing the clamping force (54) acts on the base jaw (36).

30. Clamping device according to Claim 29, **characterised in that** the actuating force (66) acts on the web portion (44).

31. Clamping device according to Claim 29 or 30, **characterised in that** the actuating forces (66) can be transmitted through a clamping tube (24) which acts on a clamping tube seating (146) at the base jaw (36).

32. Clamping device according to Claim 31, **characterised in that** the clamping tube seating (146) is formed in the web portion (44).

33. Clamping device according to any one of the preceding Claims, **characterised in that** the housing (14) is of multipart construction.

34. Clamping device according to Claim 33, **characterised in that** the housing (14) has a central part (100) and flanges (102, 104) disposed on both sides of the central part (100).

35. Clamping device according to Claim 33 or 34, **characterised in that** the housing (14) comprises a plurality of segments (106) disposed around the central axis (34).

36. Clamping device according to Claim 35, **characterised in that** interfaces (108) between the segments (106) extend through a respective seating (110) for the guide portions (40) of the clamping jaws (30).

37. Clamping device according to any one of the preceding Claims, **characterised in that** a seal (166), which surrounds the mounting portion (42) of the base jaw (36), is disposed in the region of a front side (164) of the housing (14).

38. Clamping device according to Claim 37, **characterised in that** the mounting portion (42) has an outer contour (160) which extends parallel to the guide direction (32).

39. Clamping device according to any one of the preceding Claims, **characterised in that** a measuring device (180) for determining a position of the clamping jaws (30) is associated with the clamping device.

40. Clamping device according to Claim 39, **characterised in that** the measuring device (180) detects the position of the clamping jaws (30) in a direction parallel to the central axis (34) of the housing.

41. Clamping device according to Claim 40, **characterised in that** the measuring device (180) detects the position of the clamping jaws (30) together.

42. Clamping device according to any one of Claims 39 to 41, **characterised in that** there is associated with the measuring device (180) a position transmission element (190) which essentially detects a position of a point of action (146) of the actuating force (66) on the base jaw.

43. Clamping device according to Claim 42, **characterised in that** the position transmission element (190) is disposed in the clamping tube (24).

44. Spindle unit for a machine tool with a spindle (16) which is mounted so as to rotate about a spindle axis (20) and carries a clamping device (10) for a workpiece (12), **characterised in that** the clamping device (10) is formed according to any one of Claims 1 to 43.

## Revendications

1. Dispositif de serrage pour une broche (16) entraînable en rotation autour d'un axe de broche (20), destiné au serrage de pièces (12), comprenant un carter (14) rotatif autour de l'axe de broche (20) et des mâchoires de serrage (30) déplaçables dans une direction de guidage (32) et guidées sur des guidages (60, 62) dans le carter (14),
**caractérisé en ce que** les guidages sont réalisés comme des glissières à rouleaux (60, 62), et **en ce que** chaque guidage guide une partie coulissante (40) de la mâchoire de serrage (30) correspondante entre au moins deux glissières à rouleaux (60, 62) s'étendant parallèlement à la direction de guidage (32).

2. Dispositif de serrage selon la revendication 1, **caractérisé en ce que** les glissières à rouleaux (60, 62) guident la partie coulissante (40) en la maintenant contre un déplacement dans une direction transversale à la direction de guidage (32) et parallèle à un plan d'application de force (64).

3. Dispositif de serrage selon la revendication 1 ou la revendication 2, **caractérisé en ce que** les glissières à rouleaux (60, 62) sont réalisées et disposées de manière à recevoir sur la partie coulissante (40) les forces transversales s'exerçant transversalement à la direction de guidage (32) et parallèlement à un plan d'application de force (64).

4. Dispositif de serrage selon l'une des revendications précédentes, **caractérisé en ce que** les glissières à rouleaux (60, 62) sont réalisées pour recevoir les moments de basculement exercés sur la partie coulissante (40) par la force de serrage (54)

5. Dispositif de serrage selon l'une des revendications précédentes, **caractérisé en ce que** les glissières à rouleaux (60, 62) sont réalisées pour recevoir les forces exercées dans des directions opposées transversalement à la direction de guidage (32) et parallèlement à un plan d'application de force (64).

6. Dispositif de serrage selon l'une des revendications précédentes, **caractérisé en ce que** les deux glissières à rouleaux (60, 62) au moins maintiennent la partie coulissante (40) symétriquement au plan d'application de force (64).

7. Dispositif de serrage selon l'une des revendications précédentes, **caractérisé en ce que** les glissières à rouleaux (60, 62) guident les parties coulissantes (40) en les ajustant parallèlement à un plan de guidage (68) traversant la direction de guidage (32) et s'étendant transversalement à un plan d'application de force (64).

8. Dispositif de serrage selon l'une des revendications 2 à 7, **caractérisé en ce que** le plan d'application de force (64) s'étend parallèlement à un axe central (34) du dispositif de serrage.

9. Dispositif de serrage selon la revendication 8, **caractérisé en ce que** le plan d'application de force (64) traverse l'axe central (34) du dispositif de serrage.

10. Dispositif de serrage selon l'une des revendications précédentes, **caractérisé en ce que** la partie coulissante (40) est guidée sur un premier côté par une première glissière à rouleaux (60).

11. Dispositif de serrage selon l'une des revendications précédentes, **caractérisé en ce que**, sur un deuxième côté opposé au premier côté, la partie coulissante (40) est guidée par au moins une deuxième glissière à rouleaux (62).

12. Dispositif de serrage selon la revendication 11, **caractérisé en ce que** la partie coulissante (40) est guidée sur le deuxième côté par deux deuxièmes glissières à rouleaux (62a, 62b) espacées l'une de l'autre.

13. Dispositif de serrage selon l'une des revendications 10 à 12, **caractérisé en ce que** la partie coulissante (40) présente sur le premier côté une première surface de roulement (72) pour des corps de roulement (76) de la première glissière à rouleaux (60).

14. Dispositif de serrage selon l'une des revendications 10 à 13, **caractérisé en ce que** la partie coulissante (40) présente sur le deuxième côté au moins une deuxième surface de roulement (82) pour des corps de roulement (86) de la ou des deuxièmes glissières à rouleaux (62).

15. Dispositif de serrage selon la revendication 14, **caractérisé en ce que** la partie coulissante (40) présente sur le deuxième côté deux deuxièmes surfaces de roulement (82a, b) pour des corps de roulement (86a, b) des deuxièmes glissières à rouleaux (62a, b).

16. Dispositif de serrage selon l'une des revendications précédentes, **caractérisé en ce que** le carter (14) comprend un logement (110) pour chaque partie coulissante (40) de chaque mâchoire de serrage (30).

17. Dispositif de serrage selon la revendication 16, **caractérisé en ce que** le logement (110) comporte une première surface de roulement (74) côté carter pour les corps de roulement (76) de la première glissière à rouleaux (60).

18. Dispositif de serrage selon la revendication 16 ou la revendication 17, **caractérisé en ce que** le logement (110) comporte au moins une deuxième surface de roulement (84) côté carter pour les corps de roulement (86) de la ou des deuxièmes glissières à rouleaux (62).

19. Dispositif de serrage selon la revendication 18, **caractérisé en ce que** le logement (110) comporte deux deuxièmes surfaces de roulement (84a, 84b) côté carter pour les corps de roulement (86a, 86b) des deuxièmes glissières à rouleaux (62a, b).

20. Dispositif de serrage selon l'une des revendications précédentes, **caractérisé en ce que** les directions de guidage (32) des mâchoires de serrage (30) s'étendent en formant un angle aigu avec un axe central (34) du carter (14).

21. Dispositif de serrage selon la revendication 20, **caractérisé en ce que** les directions de guidage (32) des mâchoires de serrage (30) s'étendent en formant un angle de quelque 60 ° au maximum avec l'axe central (34) du carter (14).

22. Dispositif de serrage selon la revendication 20 ou la revendication 21, **caractérisé en ce que** les directions de guidage (32) des mâchoires de serrage (30) s'étendent en formant un angle aigu de quelque 45 ° au maximum avec l'axe central (34) du carter (14).

23. Dispositif de serrage selon l'une des revendications précédentes, **caractérisé en ce que**, pour générer la force de serrage (54), une force d'actionnement (66) s'exerçant dans une direction parallèle à l'axe central (34) peut être appliquée sur les mâchoires de serrage (30).

24. Dispositif de serrage selon l'une des revendications précédentes, **caractérisé en ce que** les mâchoires de serrage (30) comprennent une mâchoire de base (36) guidée dans le carter (14) et une mâchoire rapportée (48) applicable sur la mâchoire de base (36).

25. Dispositif de serrage selon la revendication 24, **caractérisé en ce que** la mâchoire rapportée (48) s'étend en dehors du carter (14).

26. Dispositif de serrage selon la revendication 24 ou la revendication 25, **caractérisé en ce que** la mâchoire de base (36) comprend la partie coulissante (40) eL une partie de montage (42) pour le montage de la mâchoire rapportée (48).

27. Dispositif de serrage selon l'une des revendications 24 à 26, **caractérisé en ce que** la mâchoire de base (36) comprend une partie d'âme (44) s'éLendant entre la partie coulissante (40) et la partie de montage (42).

28. Dispositif de serrage selon la revendication 27, **caractérisé en ce que** la partie d'âme (44) présente une traversée (132) limitant un déplacement de la mâchoire de base (36) dans la direction de guidage (32).

29. Dispositif de serrage selon l'une des revendications 24 à 28, **caractérisé en ce que** la force d'actionnement (66) agit sur la mâchoire de base (36) pour générer la force de serrage (54).

30. Dispositif de serrage selon la revendication 29, **caractérisé en ce que** la force d'actionnement (66) agit sur la partie d'âme (44).

31. Dispositif de serrage selon la revendication 29 ou la revendication 30, **caractérisé en ce que** les forces d'actionnement (66) sont transmissibles par un manchon de serrage (24) agissant sur un logement de manchon de serrage (146) sur la mâchoire de base (36).

32. Dispositif de serrage selon la revendication 31, **caractérisé en ce que** le logement de manchon de serrage (146) est ménagé dans la partie d'âme (44).

33. Dispositif de serrage selon l'une des revendications précédentes, **caractérisé en ce que** le carter (14) est réalisé en plusieurs parties.

34. Dispositif de serrage selon la revendication 33, **caractérisé en ce que** le carter (14) comporte une partie centrale (100) et des flasques (102, 104) disposées des deux côtés de la partie centrale (100).

35. Dispositif de serrage selon la revendication 33 ou la revendication 34, **caractérisé en ce que** le carter (14) comprend plusieurs segments (106) disposés autour de l'axe central (34).

36. Dispositif de serrage selon la revendication 35, **caractérisé en ce que** des surfaces de séparation (108) entre les segments (106) s'étendent chacune au travers d'un logement (110) pour les parties coulissantes (40) des mâchoires de serrage (30).

37. Dispositif de serrage selon l'une des revendications précédentes, **caractérisé en ce qu'**un joint d'étanchéité (166) entourant la partie de montage (42) de la mâchoire de base (36) est disposé dans la région d'une face frontale (164) du carter (14).

38. Dispositif de serrage selon la revendication 37, **caractérisé en ce que** la partie de montage (42) présente un contour extérieur (160) s'étendant parallèlement à la direction de guidage (32).

39. Dispositif de serrage selon l'une des revendications précédentes, **caractérisé en ce qu'**un dispositif de mesure (180) pour la détermination d'une position des mâchoires de serrage (30) est associé au dispositif de serrage.

40. Dispositif de serrage selon la revendication 39, **caractérisé en ce que** le dispositif de mesure (180) saisit la position des mâchoires de serrage (30) dans une direction parallèle à l'axe central (34) du carter.

41. Dispositif de serrage selon la revendication 40, **caractérisé en ce que** le dispositif de mesure (180) saisit globalement la position des mâchoires de serrage (30).

42. Dispositif de serrage selon l'une des revendications 39 à 41, **caractérisé en ce qu'**un élément de transmission de position (190) est associé au dispositif de mesure (180), lequel saisit essentiellement une position d'un point d'action (146) de la force d'actionnement (66) sur la mâchoire de base.

43. Dispositif de serrage selon la revendication 42, **caractérisé en ce que** l'élément de transmission de position (190) est disposé dans le manchon de serrage (24).

44. Unité de broche pour une machine-outil avec une broche (16) montée pour tourner autour d'un axe de broche (20), laquelle supporte un dispositif de serrage (10) pour une pièce (12), **caractérisée en ce que** le dispositif de serrage (10) est réalisé selon l'une des revendications 1 à 43.
